# EUROPÄISCHE PATENTSCHRIFT

(11) **EP 1 007 271 B1**
(45) Veröffentlichungstag und Bekanntmachung des Hinweises auf die Patenterteilung: **23.10.2002**
(21) Anmeldenummer: 98949886.0
(22) Anmeldetag: 13.08.1998
(51) Int. Cl.: B23P 15/04, F01D 5/18

(54) **GASTURBINENSCHAUFEL UND VERFAHREN ZUM HERSTELLEN EINER GASTURBINENSCHAUFEL**
GAS TURBINE VANE AND METHOD FOR PRODUCING A GAS TURBINE VANE
AUBE DE TURBINE A GAZ ET PROCEDE PERMETTANT DE LA PRODUIRE

(30) Priorität: 29.08.1997 DE 19737845
(43) Veröffentlichungstag der Anmeldung: 14.06.2000
(73) Patentinhaber: SIEMENS AKTIENGESELLSCHAFT, 80333 München (DE)
(72) Erfinder: BIRKNER, Jens, D-45139 Essen (DE); HALBERSTADT, Knut, D-45481 Mülheim (DE)
(86) Internationale Anmeldenummer: DE9802349
(87) Internationale Veröffentlichungsnummer: WO99011420

(56) Entgegenhaltungen:
- EP-A- 0 742 347
- WO-A-97/05299
- US-A- 4 695 247
- US-A- 4 768 700
- US-A- 5 328 331
- US-A- 5 392 515
- US-A- 5 640 767

## Beschreibung

Die Erfindung betrifft eine Gasturbinenschaufel entsprechend den Anspruchen 14 und 15 und ein Verfahren zum Herstellen einer Gasturbinenschaufel entsprechend Anspruch 1.

Gasturbinenschaufeln aus einem hohlen, tragenden Metallschaufelkörper mit einer Vielzahl von eingegossenen oder eingearbeiteten nutförmigen Kühlkanälen, auf die eine dünne Außenhaut durch Elektronenstrahlverdampfung oder Plasmaspritzen aufgebracht ist, sind z.B. aus der US-PS 5,640,767 bekannt. Mit diesen Gasturbinenschaufeln soll die Kühlwirkung der Luftkühlung verbessert werden, da die Kühlwirkung mit abnehmender Dicke der Schaufelwand bekanntermaßen immer besser wird. Wird jedoch die Dicke der tragenden Schaufelwand verringert, geht dies mit einem deutlichen Festigkeitsverlust des Bauteils einher.

Das Aufbringen einer dünnen Außenhaut durch Elektronenstrahlverdampfung oder Plasmaspritzen ist in "Superalloys 1996" unter dem Titel "Advanced Airfoil Fabrication", Seiten 523 bis 529, beschrieben und stellt bereits eine Verbesserung gegenüber Versuchen dar, eine doppelwandige Schaufel zu gießen, bei der die innere, dicke Wand die auftretenden Kräfte aufnimmt und bei der die äußere dünne Wand lediglich eine gut zu kühlende, aerodynamisch günstige Hülle darstellt. Derartige Schaufeln sind kostspielig in der Herstellung und erlauben es nicht, ein günstiges Verhältnis zwischen der Dicke der inneren, tragenden Wand und der äußeren dünnen Wand zu erreichen, so daß die Verbesserung der Kühlwirkung geringfügig ist.

Bei dem in dem Aufsatz "Advanced Airfoil Fabrication" beschriebenen Verfahren und den sich daraus ergebenden Gasturbinenschaufeln ist die Kühlwirkung nicht optimal, da der Strömungswiderstand in den nutförmigen Kühlkanälen hoch ist und ausschließlich eine Innenkühlung durch diese nutförmigen Kühlkanäle stattfindet. Eine solche Turbinenschaufel ist auch in dem US-Patent 5,640,767 beschrieben.

Eine kühlbare Gasturbinenschaufel ist in dem US-Patent 5,392,515 beschrieben. Hierbei sind an der Außenseite einer einen Hohlraum umschließenden Wand Kühltaschen angebracht, die über Kanäle zur Kühlluftzuführung mit dem Hohlraum verbunden sind.

Die US-PS 4,768,700 betrifft eine Methode zum Diffusionsschweißen einer tragenden Wand einer Turbinenschaufel mit einer vorgeformten metallischen Ummantelung aus einem entsprechenden mit Bohrungen versehenen Blech. Die Methode dient der Herstellung doppelwandiger Turbinenachaufeln, die mittels Transpirationskühlung kühlbar sind. Hierzu weist die tragende Wand Bohrungen für die Zufuhr der Kühlluft sowie Kanäle auf, so daß die Kühlluft aus den Kanälen sich entlang der tragenden Wand ausbreiten und durch die Bohrungen in der Ummantelung austreten kann. Dadurch wird eine Transpirationskühlung der Turbinenschaufel herbeigeführt.

Der Erfindung liegt die Aufgabe zugrunde, ein einfach durchzuführendes Verfahren zum Herstellen einer Gasturbinenschaufel anzugeben, mit dem sich eine Gasturbinenschaufel für den Einsatz bei hohen Temperaturen herstellen läßt. Auch soll eine entsprechend ausgestaltete Gasturbinenschaufel angegeben werden.

Ausgehend von dieser Aufgabenstellung umfaßt das Verfahren zum Herstellen einer Gasturbinenschaufel erfindungsgemäß die folgenden Schritte:
- Herstellen, insbesondere Gießen, eines hohlen, tragenden Metallschaufelkörpers,
- Herstellen einer Vielzahl von Erhebungen auf einer Außenoberfläche eines Schaufelblattes des Metallschaufelkörpers,
- Bohren von Prallkühlbohrungen zwischen den Erhebungen von der Außenfläche zu einem hohlen Innenraum des Metallschaufelkörpers,
- Aufbringen einer die Zwischenräume zwischen den Erhebungen ausfüllenden und die Prallkühlbohrungen verschließenden Beschichtung aus einem hitzebeständigen, entfernbaren Material,
- Aufbringen einer an den, insbesondere metallisch blanken Oberseiten der Erhebungen haftenden Deckschicht und
- Entfernen des Materials aus den Zwischenräumen zwischen den Erhebungen des Metallschaufelkörpers und der Deckschicht.

Die Erfindung geht von der Überlegung aus, daß eine möglichst intensive Kühlluftzufuhr zur äußeren Deckschicht erforderlich ist, um die nach dem Verfahren hergestellte Gasturbinenschaufel sehr heiß, d. h. bei mehr als 1250°C, betreiben zu können. Dies wird dadurch erreicht, daß die Deckschicht vorzugsweise nur punktweise über insbesonders zapfenartigen Erhebungen mit dem Schaufelblatt verbunden ist, so daß ein großer freier Zwischenraum zwischen der Deckschicht und der Außenoberfläche des tragenden Metallschaufelkörpers vorhanden ist. In diesen Zwischenraum wird Kühlluft durch die Prallkühlbohrungen hineingeleitet, und die Innenoberfläche der Deckschicht wird durch Prallkühlung intensiv gekühlt.

Die Erhebungen sind insbesonders so gestaltet, daß eine Breite zwischen zwei benachbarten Erhebungen größer als eine Breite der Erhebung selbst ist. Neben zapfenförmigen Erhebungen sind auch längliche oder andersartige Erhebungen oder auch verschiedenförmige Erhebungen zusammen an dem Schaufelblatt in einer Ausgestaltung möglich. Durch geeignete Auswahl der Geometrie der Erhebung sowie der Verteilung der Erhebungen über das Schaufelblatt ist der Wärmefluß über dieses gezielt einstellbar. Die Verteilung der Erhebungen ist dabei abhängig von Stabilitätskriterien bezüglich der aufzubringenden Deckschicht.

In einer vorteilhaften Ausführung des Verfahrens werden die Erhebungen beim Gießen des Metallschaufelkörpers gleichzeitig hergestellt, d.h. mitgegossen. Dieses erspart zusätzliche Arbeitsgänge und ermöglicht eine besonders sichere Verbindung zwischen dem Schaufelblatt und den einzelnen Erhebungen.

Der tragende Metallschaufelkörper mit den beispielsweise zapfenartigen Erhebungen läßt sich als Gußstück hochgenau herstellen, und das Bohren der Prallkühlbohrungen läßt sich ebenfalls, bevorzugterweise mittels Laserstrahl, auf einfache Weise durchführen.

Das die Zwischenräume ausfüllende, hitzebeständige und entfernbare Material ist vorzugsweise ein Keramikwerkstoff, der nach dem Aufbringen getrocknet und gesintert wird. Bei diesem Keramikwerkstoff kann es sich um den Werkstoff handeln, der auch als Kernmaterial beim Gießen des hohlen, tragenden Metallschaufelkörpers verwendet wird. Insbesonders ist dieser Werkstoff auch auslaugbar.

Um eine sichere Haftung zwischen der aufzubringenden Deckschicht und den Oberseiten der Erhebungen zu erreichen, kann die Oberfläche des beschichteten Metallschaufelkörpers nach dem Trocknen und Sintern der Beschichtung durch Schleifen bearbeitet werden, so daß die Oberseiten der Erhebungen metallisch blank freiliegen.

Das Aufbringen einer Deckschicht aus Metall kann im Vakuum durch Elektronenstrahlverdampfung erfolgen, während sich Deckschichtmaterialien, die auch nichtmetallisch sein können, auch durch Plasmaspritzen aufbringen lassen. Eine Metalldeckschicht zeichnet sich dadurch aus, daß sie eine gute Wärmeleitfähigkeit besitzt und eine intermetallische Verbindung mit den metallisch blanken Oberseiten der Erhebungen gewährleistet. Auf diese Metalldeckschicht kann auch noch eine zusätzliche Oxidations- und Korrosionsschutzschicht aufgebracht werden.

Die Verbindung zwischen der Deckschicht und den metallisch blanken Oberseiten der Erhebungen des Schaufelkörpers kann durch eine Wärmebehandlung verbessert werden. Durch die Wärmebehandlung werden Diffusionsvorgänge alusgelöst, die eine sichere, intermetallische Verbindung zwischen der Deckschicht und dem Metallschaufelkörper herbeiführen.

Zur Kühlung der den heißen Gasen ausgesetzten Außenfläche der Deckschicht kann diese eine Vielzahl von schrägen Filmkühlbohrungen aufweisen. Im Betrieb bildet dann die austretende Kühlluft einen entlang der Außenoberfläche strömenden kühlenden Film.

Die äußere Oberfläche der Schaufel kann anschließend fein bearbeitet und/oder geglättet werden. Sie kann ggf. auch danach eine weitere Keramikbeschichtung, z.B. aus einer ZrO₂₋ Schicht, die mit Yttrium zumindest teilstabilisiert ist, erhalten. Eine solche Keramikbeschichtung kann auch auf die Innenoberfläche des hohlen, tragenden Metallschaufelkörpers aufgebracht werden.

Der Lösung des eingangs erwähnten Problems der Hochtemperaturbeständigkeit und der leichten Herstellbarkeit dient eine Gasturbinenschaufel, die erfindungsgemäß einen hohlen, tragenden Metallschaufelkörper mit einer Vielzahl von Erhebungen auf der Außenoberfläche des Schaufelblatts, eine Vielzahl von Prallkühlbohrungen zwischen den Erhebungen und eine an den Oberseiten der Erhebungen haftende, dünne Deckschicht mit einer Dicke zwischen etwa 0,1 mm bis 0,5 mm, insbesondere zwischen 180 µm und 300 µm, umfaßt.

Der Lösung des eingangs erwähnten Problems der Hochtemperaturbeständigkeit und der leichten Herstellbarkeit kann ebenso eine Gasturbinenschaufel dienen, die erfindungsgemäß einen hohlen, tragenden Metallschaufelkörper mit einer Vielzahl von zapfenförmigen Erhebungen auf der Außenoberfläche des Schaufelblatts, eine Vielzahl von Prallkühlbohrungen zwischen den Erhebungen und eine an den Oberseiten der Erhebungen haftende, dünne Deckschicht umfaßt.

Die genannte Deckschicht kann vorzugsweise mit einer Vielzahl von schrägen Filmkühlbohrungen versehen sein. Durch die Prallkühlbohrungen strömende Kühlluft kühlt die Innenoberfläche der Deckschicht durch Prallkühlung. Die Kühlluft tritt zumindest teilweise durch die schrägen Filmkühlbohrungen an die Außenoberfläche der Deckschicht aus und bildet einen Kühlfilm. Die Auftreffbereiche der Prallkühlluft sind vor zugsweise gegenüber den Eintrittsöffnungen der Filmkühlbohrungen z.B. um zwischen einen viertel oder halben Abstand der Prallkühlbohrungen versetzt. Die Deckschicht kann dabei aus Metall bestehen und gegebenenfalls mit einer zusätzlichen Oxidations- und Korrosionsschicht, z.B.: einer sogenannten MCrAlY-Legierung, versehen sein. Neben der Außenoberfläche kann auch die Innenoberfläche des hohlen Schaufelkörpers mit einer Keramikbeschichtung versehen sein. Bevorzugt ist die Innenoberfläche mit einer Schutzschicht überzogen, insbesondere chromiert oder alitiert. Die Erhebungen sind vorzugsweise zapfenartig.

Ausführungsbeispiele der Erfindung werden nachstehend anhand der Zeichnung näher erläutert. In der Zeichnung zeigen:
- Fig. 1: die Seitenansicht eines gegossenen, hohlen, tragenden Metallschaufelkörpers,
- Fig. 2: einen Querschnitt durch das Schaufelblatt entlang der Linie II - II in Fig. 1,
- Fig. 3: eine vergrößerte Schnittdarstellung der Wand des hohlen, tragenden Metallschaufelkörpers,
- Fig. 4: eine vergrößerte Schnittdarstellung der Wand eines hohlen, tragenden Metallschaufelkörpers nach Aufbringen einer auslaugbaren Beschichtung und
- Fig. 5: eine vergrößerte Schnittdarstellung einer Wand einer fertigen Gasturbinenschaufel.

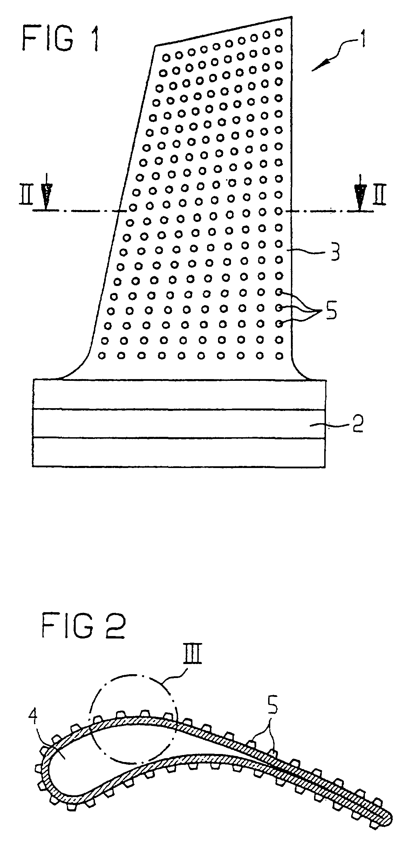

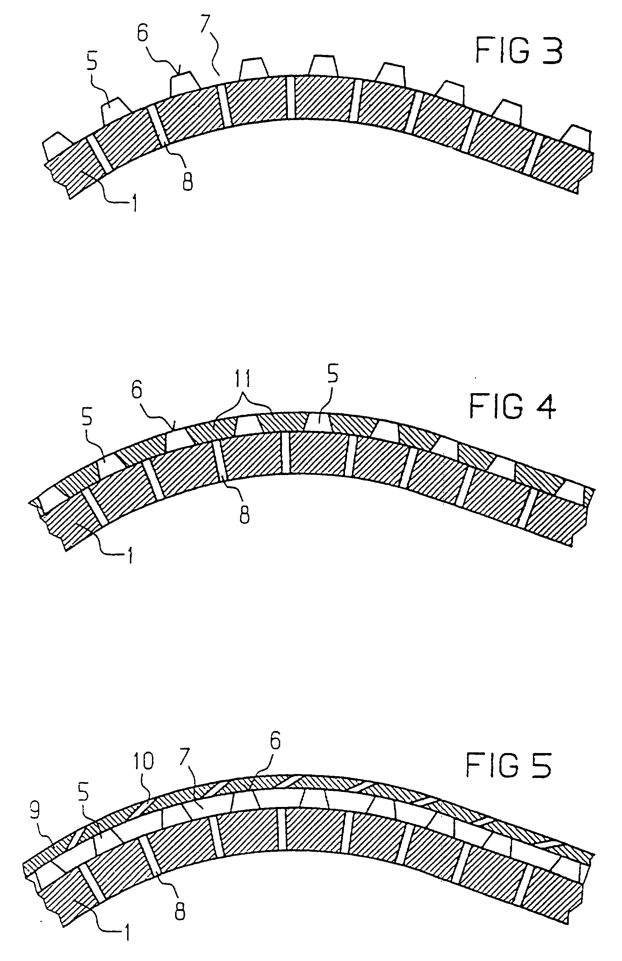

Aus den Fig. 1 bis 5 ergeben sich die einzelnen Fertigungsschritte beim Herstellen einer erfindungsgemäßen Gasturbinenschaufel. Zunächst wird, wie in Figur 1 in der Seitenansicht und in Figur 2 in einem Querschnitt dargestellt, im Genaugußverfahren ein hohler, tragender Metallschaufelkörper 1, beispielsweise aus einer hochhitzebeständigen Nickellegierung, gegossen. Dieser Metallschaufelkörper 1 besteht aus einem Schaufelfuß 2 und einem Schaufelblatt 3 mit einem hohlen Innenraum 4. Auf der Außenoberfläche des Schaufelblatts 3 ist eine Vielzahl von zapfenartigen Erhebungen 5 angeordnet.

Figur 3 zeigt, daß nach dem Gießen des Metallschaufelkörpers 1 zwischen den zapfenartigen Erhebungen 5 eine Vielzahl von Prallkühlbohrungen 8, beispielsweise durch Laserstrahlbohren, angebracht wird.

Hiernach werden die Zwischenräume 7 zwischen den Erhebungen 5 mit einem hitzebeständigen, auslaugbaren Material ausgefüllt. Dabei werden die Prallkühlbohrungen 8 verschlossen, wie in Figur 4 dargestellt. Diese Beschichtung 11 kann aus einem Keramikmaterial bestehen, wie es auch als Kernmaterial beim Gießen des hohlen, tragenden Metallschaufelkörpers 1 verwendet wird. Die Beschichtung 11 weist eine Dicke auf, die der Höhe der zapfenartigen Erhebungen 5 entspricht, so daß die Oberseiten 6 der Erhebungen 5 freiliegen. Ggf. wird die Oberfläche des Metallschaufelkörpers 1 mit der auslaugbaren Beschichtung 11 nach dem Trocknen und Sintern der Beschichtung 11 durch Schleifen so bearbeitet, daß die Oberseiten 6 der Erhebungen 5 sauber und metallisch blank innerhalb der Beschichtung 11 vorliegen.

Der beschichtete Schaufelkörper 1 wird nunmehr in eine hier nicht näher dargestellte Vorrichtung zum Aufbringen einer Deckschicht 9 gebracht. Figur 5 zeigt die aufgebrachte Deckschicht 9. Diese besteht vorzugsweise ebenfalls aus einem hochtemperaturfesten Metall, z. B. aus demselben Metall, das zum Gießen des Metallschaufelkörpers 1 diente. Das Aufbringen der Deckschicht 9 kann im Vakuum durch Elektronenstrahlverdampfung erfolgen. Dieses Verfahren ist in dem eingangs erwähnten Aufsatz "Advanced Airfoil Fabrication" beschrieben und besonders zum Aufbringen einer Metalldeckschicht 9 geeignet.

Die Deckschicht 9 läßt sich auch durch Plasmaspritzen aufbringen, wobei in diesem Fall auch das Aufbringen von nichtmetallischen Deckschichten möglich ist.

Gegebenenfalls kann auf eine Deckschicht 9 aus Metall noch eine zusätzliche Oxidations- und Korrosions-Schutzschicht als zweite Lage aufgebracht werden.

Durch eine anschließende Wärmebehandlung lassen sich Diffusionsvorgänge auslösen, die eine sichere Anbindung der Deckschicht 9 an die Oberseiten 6 der Erhebungen 5 bewirken.

Um die Zwischenräume 7 nach dem Aufbringen der Deckschicht 9 freizulegen, wird die Beschichtung 11 mittels bekannter Verfahren entfernt, insbesondere ausgelaugt.

Vor oder nach dem Auslaugen können in die Deckschicht 9 schräge Filmkühlbohrungen 10 eingebracht werden. Dadurch ist sichergestellt, daß im Betrieb zumindest ein Teil der durch die Prallkühlbohrungen 8 in die Zwischenräume 7 eintretenden Kühlluft durch die schrägen Filmkühlbohrungen 10 auf die Außenoberfläche der Gasturbinenschaufel austritt und eine Filmkühlschicht auf der Außenoberfläche bildet.

Gegebenenfalls kann sich noch eine Feinbearbeitung und/oder Glättung der äußeren Oberfläche der Schaufel anschließen. Danach liegt eine fertige Gasturbinenschaufel mit einem hohlen, tragenden Metallschaufelkörper 1 und einer dünnen, äußeren Wand, die gut gekühlt ist und sich aerodynamisch günstig gestalten läßt, vor.

## Patentansprüche

1. Verfahren zum Herstellen einer Gasturbinenschaufel mit den Schritten:
- Gießen eines hohlen, tragenden Metallschaufelkörpers (1),
- Herstellen einer Vielzahl von Erhebungen (5) auf einer Außenoberfläche eines Schaufelblattes (3) des Metallschaufelkörpers (1),
- Bohren von Prallkühlbohrungen (8) zwischen den Erhebungen (5) von der Außenoberfläche zu einem hohlen Innenraum (4) des Metallschaufelkörpers (1),
- Aufbringen einer die Zwischenräume (7) zwischen den Erhebungen (5) ausfüllenden und die Prallkühlbohrungen (8) verschließenden Beschichtung (11) aus einem hitzebeständigen, entfernbaren Material,
- Aufbringen einer an den insbesondere metallisch blanken Oberseiten (6) der Erhebungen (5) haftenden Deckschicht (9) und
- Entfernen des Materials aus den Zwisehenräumen (7) zwischen den Erhebungen (5) des Metallschaufelkörpers (1) und der Deckschicht (9).

2. Verfahren nach Anspruch 1, bei dem die Erhebungen (5) beim Gießen des Metallschaufelkörpers (1) mithergestellt werden, insbesonders als zapfenartige Erhebungen.

3. Verfahren nach Anspruch 1 oder 2, bei dem das hitzebeständige, entfernbare Material (11) ausgelaugt wird.

4. Verfahren nach einem der Ansprüche 11 bis 3, bei dem das Bohren der Prallkühlbohrungen (8) mittels Laserstrahl erfolgt.

5. Verfahren nach einem der Ansprüche 1 bis 4, bei dem die Beschichtung (11) aus einem Keramikwerkstoff besteht, der getrocknet und gesintert wird.

6. Verfahren nach einem der Ansprüche 1 bis 5, bei dem die Oberfläche des beschichteten Metallschaufelkörpers (1) nach dem Trocknen und Sintern durch Schleifen bearbeitet wird, so daß die Oberseiten (6) der Erhebungen (5) metallisch blank freiliegen.

7. Verfahren nach einem der Ansprüche 1 bis 6, bei dem eine Metalldeckschicht (9) im Vakuum durch Elektronenstrahlverdampfung aufgebracht wird.

8. Verfahren nach einem der Ansprüche 1 bis 7, bei dem die Deckschicht (9) durch Plasmaspritzen aufgebracht wird.

9. Verfahren nach einem der Ansprüche 1 bis 8, bei dem auf die Metalldeckschicht (9) zusätzlich eine Oxidations- und Korrosionsschutzschicht aufgebracht wird.

10. Verfahren nach einem der Ansprüche 1 bis 9, bei dem der Metallschaufelkörper (1) mit der Deckschicht (9) einer Wärmebehandlung zur sicheren Verbindung der Deckschicht (9) mit den Oberseiten (6) der Erhebungen (5) durch Diffusion unterzogen wird.

11. Verfahren nach einem der Ansprüche 1 bis 10, bei dem in die Deckschicht (9) eine Vielzahl von schrägen Filmkühlbohrungen (10) gebohrt werden.

12. Verfahren nach einem der Ansprüche 1 bis 11, bei dem die äußere Oberfläche der Schaufel feinbearbeitet und/oder geglättet wird.

13. Verfahren nach einem der Ansprüche 1 bis 12, bei dem der Hohlraum (4) des Schaufelkörpers (1) und/oder die äußere Oberfläche der Schaufel mit einer Schutzschicht aus Keramik versehen werden.

14. Gasturbinenschaufel aus einem hohlen, tragenden Metallschaufelkörper (1) mit einer Vielzahl von Erhebungen (5) auf der Außenoberfläche des Schaufelblatts (3), einer Vielzahl von Prallkühlbohrungen (8) zwischen den Erhebungen (5) und einer an den Oberseiten (6) der Erhebungen (5) haftenden, dünnen Deckschicht (9), welche Deckschicht (9) eine Dicke zwischen 0,1 mm bis 0,5 mm aufweist.

15. Gasturbinenschaufel aus einem hohlen, tragenden Metallschaufelkörper (1) mit einer Vielzahl zapfenartiger Erhebungen (5) auf der Außenoberfläche des Schaufelblatts (3), einer Vielzahl von Prallkühlbohrungen (8) zwischen den Erhebungen (5) und einer an den Oberseiten (6) der Erhebungen (5) haftenden, dünnen Deckschicht (9).

16. Gasturbinenschaufel nach Anspruch 14 oder 15 mit einer Vielzahl von schrägen Filmkühlbohrungen (10) in der Deckschicht (9).

17. Gasturbinenschaufel nach Anspruch 14, 15 oder 16 mit einer Metalldeckschicht (9).

18. Gasturbinenschaufel nach einem der Ansprüche 14 bis 17 mit einer zusätzlichen Oxidations- und Korrosionsschutzschicht.

19. Gasturbinenschaufel nach einem der Ansprüche 14 bis 18 mit einer zusätzlichen, inneren Keramikbeschichtung.

## Claims

1. Method of manufacturing a gas-turbine blade, comprising the following steps:
- casting a hollow, supporting metal blade body (1),
- making a multiplicity of prominences (5) on an outer surface of a blade aerofoil (3) of the metal blade body (1),
- drilling impingement-cooling bores (8) between the prominences (5) from the outer surface to a hollow interior space (4) of the metal blade body (1),
- applying a coating (11) which fills the intermediate spaces (7) between the prominences (5) and closes the impingement-cooling bores (8) and is made of a heat-resistant, removable material,
- applying a covering coat (9) adhering to the, in particular metallically bright, top sides (6) of the prominences (5), and
- removing the material from the intermediate spaces (7) between the prominences (5) of the metal blade body (1) and the covering coat (9).

2. Method according to Claim 1, in which the prominences (5), in particular as peg-like prominences, are made along with the metal blade body (1) when the latter is being cast.

3. Method according to Claim 1 or 2, in which the heat-resistant, removable material (11) is leached.

4. Method according to one of Claims 1 to 3, in which the drilling of the impingement-cooling bores (8) is effected by means of a laser beam.

5. Method according to one of Claims 1 to 4, in which the coating (11) is made of a ceramic material, which is dried and sintered.

6. Method according to one of Claims 1 to 5, in which the surface of the coated metal blade body (1), after the drying and sintering, is machined by grinding, so that the top sides (6) of the prominences (5) are exposed in a metallically bright state.

7. Method according to one of Claims 1 to 6, in which a metal covering coat (9) is applied in a vacuum by electron-beam vaporization.

8. Method according to one of Claims 1 to 7, in which the covering coat (9) is applied by plasma spraying.

9. Method according to one of Claims 1 to 8, in which an oxidation- and corrosion-inhibiting coat is additionally applied to the metal covering coat (9).

10. Method according to one of Claims 1 to 9, in which the metal blade body (1) having the covering coat (9) is subjected to a heat treatment for securely connecting the covering coat (9) to the top sides (6) of the prominences (5) by diffusion.

11. Method according to one of Claims 1 to 10, in which a multiplicity of oblique film-cooling bores (10) are drilled in the covering coat (9).

12. Method according to one of Claims 1 to 11, in which the outer surface of the blade is precision-machined and/or smoothed.

13. Method according to one of Claims 1 to 12, in which the hollow space (4) of the blade body (1) and/or the outer surface of the blade is provided with a ceramic protective coat.

14. Gas-turbine blade comprising a hollow, supporting metal blade body (1), having a multiplicity of prominences (5) on the outer surface of the blade aerofoil (3), a multiplicity of impingement-cooling bores (8) between the prominences (5) and a thin covering coat (9) adhering to the top sides (6) of the prominences (5), which covering coat (9) has a thickness of between 0.1mm and 0.5mm.

15. Gas-turbine blade comprising a hollow, supporting metal blade body (1), having a multiplicity of peg-like prominences (5) on the outer surface of the blade aerofoil (3), a multiplicity of impingement-cooling bores (8) between the prominences (5) and a thin covering coat (9) adhering to the top sides (6) of the prominences (5).

16. Gas-turbine blade according to Claim 14 or 15, having a multiplicity of oblique film-cooling bores (10) in the covering coat (9).

17. Gas-turbine blade according to Claim 14, 15 or 16, having a metal covering coat (9).

18. Gas-turbine blade according to one of Claims 14 to 17, having an additional oxidation- and corrosion-inhibiting coat.

19. Gas-turbine blade according to one of Claims 14 to 18, having an additional, inner ceramic coating.

## Revendications

1. Procédé de fabrication d'une aube de turbine à gaz qui consiste :
- à couler un corps (1) métallique d'aube creux et porteur,
- à ménager une pluralité de surélévations (5) sur une surface extérieure d'une lame (3) d'aube du corps (1) métallique d'aube,
- à percer des trous (8) de refroidissement par rebondissement entre les surélévations (5) de la surface extérieure vers une chambre (4) intérieure creuse du corps (1) métallique d'aube,
- à déposer un revêtement (11) en un matériau résistant à la chaleur et pouvant être enlevé qui remplit les intervalles (7) entre les surélévations (5) et qui ferme les trous (8) de refroidissement par rebondissement,
- à déposer une couche (9) de finition adhérant aux côtés (6) supérieurs notamment métalliquement nus des surélévations (5) et
- à enlever la matière des intervalles (7) compris entre les surélévations (5) du corps (1) métallique d'aube et la couche (9) de finition.

2. Procédé suivant la revendication 1, qui consiste à ménager les surélévations (5) en même temps que l'on coule le corps (1) métallique d'aube, notamment sous la forme de surélévations de type en tenon.

3. Procédé suivant la revendication 1 ou 2, qui consiste à éliminer par lixiviation la matière (11) qui résiste à la chaleur et qui peut être enlevée.

4. Procédé suivant l'une des revendications 1 à 3, qui consiste à effectuer le perçage des trous (8) de refroidissement par rebondissement au moyen d'un faisceau laser.

5. Procédé suivant l'une des revendications 1 à 4, dans lequel le revêtement (11) est en un matériau céramique qui est séché et fritté.

6. Procédé suivant l'une des revendications 1 à 5, qui consiste à traiter la surface du corps (1) métallique d'aube revêtue après le séchage et le frittage par meulage de manière à mettre à nu métalliquement les côtés (6) supérieurs des surélévations (5).

7. Procédé suivant l'une des revendications 1 à 6, qui consiste à déposer une couche (9) de finition métallique sous vide par évaporation à l'aide d'un faisceau d'électrons.

8. Procédé suivant l'une des revendications 1 à 7, qui consiste à déposer la couche (9) de finition par projection au plasma.

9. Procédé suivant l'une des revendications 1 à 8, qui consiste à déposer en plus sur la couche (9) de finition métallique une couche de protection vis à vis de l'oxydation et de la corrosion.

10. Procédé suivant l'une des revendications 1 à 9, qui consiste à soumettre le corps (1) métallique d'aube ayant la couche (9) de finition à un traitement thermique pour fixer de manière sûre la couche (9) de finition aux côtés (6) supérieurs des surélévations (5) par diffusion.

11. Procédé suivant l'une des revendications 1 à 10, qui consiste à percer dans la couche (9) de finition une pluralité de trous (10) inclinés de refroidissement par pellicule.

12. Procédé suivant l'une des revendications 1 à 11, qui consiste à soumettre la surface extérieure de l'aube à un usinage fin et/ou à la lustrer.

13. Procédé suivant l'une des revendications 1 à 12, qui consiste à munir la cavité (4) du corps (1) d'aube et/ou la surface extérieure de l'aube d'une couche de protection en céramique.

14. Aube de turbine à gaz constituée d'un corps (1) métallique d'aube creux et porteur ayant une pluralité de surélévations (5) sur la surface extérieure de la lame (3) d'aube, une pluralité de trous (8) de refroidissement par rebondissement entre les surélévations (5) et une couche (9) mince de finition adhérant aux côtés (6) supérieurs des surélévations (5), cette couche (9) de finition ayant une épaisseur comprise entre 0,1 mm et 0,5 mm.

15. Aube de turbine à gaz, constituée d'un corps (1) métallique d'aube creux et porteur ayant une pluralité de surélévations (5) de type en tenon sur la surface extérieure de la lame (3) d'aube, une pluralité de trous (8) de refroidissement par rebondissement entre les surélévations (5) et une mince couche (9) de finition adhérant aux côtés (6) supérieurs des surélévations (5).

16. Aube de turbine à gaz suivant la revendication 14 ou 15, comprenant une pluralité de trous (10) inclinés de refroidissement par pellicule ménagés dans la couche (9) de finition.

17. Aube de turbine à gaz suivant la revendication 14, 15, ou 16, comprenant une couche (9) de finition qui est métallique.

18. Aube de turbine à gaz suivant l'une des revendications 14 à 17, comprenant une couche supplémentaire de protection vis à vis de l'oxydation et de la corrosion.

19. Aube de turbine à gaz suivant l'une des revendications 14 à 18, comprenant un revêtement supplémentaire intérieur en céramique.
